# EUROPÄISCHE PATENTSCHRIFT

(11) **EP 3 855 235 B1**
(45) Veröffentlichungstag und Bekanntmachung des Hinweises auf die Patenterteilung: **19.07.2023**
(21) Anmeldenummer: 20153891.5
(22) Anmeldetag: 27.01.2020
(51) Int. Cl.: G02B 21/00, G02B 21/24, G02B 21/36

(54) **VORRICHTUNG FÜR DIE DIGITALMIKROSKOPIE**
DEVICE FOR DIGITAL MICROSCOPY
DISPOSITIF POUR LA MICROSCOPIE NUMÉRIQUE

(43) Veröffentlichungstag der Anmeldung: 28.07.2021
(73) Patentinhaber: Optikron GmbH, 07749 Jena (DE)
(72) Erfinder: SEYFFERT, Gerrit, 07749 Jena (DE); MAYER, Alexander, 07749 Jena (DE)
(74) Vertreter: Maikowski & Ninnemann Patentanwälte Partnerschaft mbB

(56) Entgegenhaltungen:
- EP-A1- 3 123 227
- EP-A2- 2 128 679
- CN-B- 101 334 525
- CN-U- 209 728 314
- DE-A1- 3 523 902
- DE-A1- 10 261 663
- DE-A1-102010 018 123
- JP-A- 2006 208 857
- US-A- 4 762 996
- US-A1- 2014 293 412
- US-A1- 2018 252 907

## Beschreibung

Die Erfindung betrifft eine Vorrichtung für die Digitalmikroskopie, welche einen Gerätefuß, ein Stativ, einen Kamerakopf und mindestens eine Halterung umfasst. Die Vorrichtung zeichnet sich durch einen modularen Aufbau auf, wobei für die Konfiguration wesentliche Module oder Komponenten (insbesondere Optik, Beleuchtung, Hilfsmittel zur Objektanordnung oder zur Halterung von Anzeigegerät, Kamera und der Betrachtungsobjekte), wie z.B. (Gerätefuß, Stativ, Halterung, Objektiv, Arbeitsplattform und weitere) lösbar miteinander verbunden sind. Die lösbaren Verbindungen werden erfindungsgemäß bevorzugt durch steckbare, formschlüssige Verbindungen und/oder durch magnetische, formschlüssige Verbindungen ausgebildet.

Digitalmikroskope sind mit einer Digitalkamera ausgestattet, so dass die Betrachtung von Objekten nicht über ein klassisches Okular sondern über einen Bildschirm erfolgt. Durch die Darstellung auf dem Bildschirm ist das Mikroskopiebild unmittelbar für mehrere Betrachter zugänglich und kann unkompliziert abgespeichert und weiterverarbeitet werden. Die einfache Handhabung dieser Mikroskope hat ein breites Anwendungsfeld in der Forschung, Entwicklung und Qualitätssicherung erschlossen.

Wünschenswert ist es dabei Digitalmikroskope zur Verfügung zu stellen, die hinsichtlich ihres Einsatzgebietes möglichst flexibel sind. Dafür muss das Digitalmikroskope transportabel sein und so robust aufgebaut, dass ein einfacher, schneller Aufbau jederzeit möglich ist. Digitalmikroskope die aus dem Stand der Technik bekannt sind, weißen jedoch oft eine sehr auslandende Bauform auf und sind nicht dafür konzipiert, transportiert zu werden. Meist ist zudem ein Mikroskopiertisch verbaut, der deutlich erhöht von der Tischfläche angebracht ist, auf der das Mikroskop aufgestellt ist. Dieser Aufbau erweist sich bei der Untersuchung von größeren Objekten etwa bei der Qualitätssicherung oft als hinderlich.

Weiterhin aus dem Stand der Technik bekannt sind Digitalmikroskope, die nach einem Baukastenprinzip zusammengesetzt werden. Dieses System ermöglicht eine gewisse Flexibilität bei der Zusammenstellung der einzelnen Komponenten, wie Stativ, Kamera oder Objektiv des Digitalmikroskops. Ziel dieser Systeme ist es, Digitalmikroskope entsprechend spezieller Kundenwünsche zur Verfügung zu stellen. Die einzelnen Komponenten werden im Allgemeinen durch Schraubverbindungen miteinander verbunden, die eine feste Verbindung der Komponenten garantieren soll. Die Schraubverbindungen wieder zu lösen ist umständlich und zeitaufwendig. Ziel dieser Systeme ist es auch nicht, dass das Mikroskop einfach und schnell auf und abgebaut wird, sondern lediglich das alle Komponenten des Mikroskops den Kundenwüschen möglichst nah kommen. Die solcherart zusammengesetzten Digitalmikroskope haben daher oft eher den Charakter eines Laboraufbaus, der an sich nicht für den Transport geeignet ist.

Diese Art von Digitalmikroskopen sind daher weder dafür geeignet, einzelne Komponenten einfach und schnell auszutauschen, um ein Gerät an neue Messaufgaben anzupassen, noch um das gesamte Digitalmikroskop in seine Komponenten zu zerlegen, um es zu transportieren. Weiterhin sind kleine Digitalmikroskope bekannt, die vorzugsweise für den mobilen Einsatz und dabei hauptsächlich nur zur Inspektion konzipiert sind. Diese sind jedoch in sehr leichter Bauform, mit zumeist kompakten Kunststoffgehäusen ausgestattet. Sie können dadurch in der Regel in ihrer Funktion und Konfiguration nicht verändert werden und bieten auch keine Möglichkeit, die Anzeigegeräte variabel und ergonomisch aufzunehmen. Solche Geräte haben eher den Charakter eines Computerzubehörs oder einer "Webcam" mit entsprechend einfacher Vergrößerungsoptik. Sie sind in ihren Möglichkeiten aufgrund der Kompaktheit und des Designs stark beschränkt. Höhere Vergrößerungen erreicht man mit solchen Geräten in der Regel nur bei sehr kleinen Arbeitsabständen. Ein wesentliches Merkmal dieser Systeme ist es auch, dass man eine Fokussierung dadurch vornimmt, dass man in dem kompakten Gehäuse die Linse im Abstand zum Sensor verändert, um "scharf zu stellen". Hierdurch verändert sich jedoch fließend der Abbildungsmaßstab, was für viele industrielle und wissenschaftliche Aufgaben nachteilig oder gar ungeeignet ist. Will man dies vermeiden, kann man solche Systeme nur an Zubehör, wie zusätzliche Stative mit einer Höhenverstellung, anbauen. Da es sich dann um allgemeine Zubehörteile handelt, sind in der Regel wieder aufwendige Schraubverbindungen nötig. Eine einfache Änderung Konfiguration ist mit diesen Vorrichtungen daher ebenfalls nicht gegeben.

US2018/252907, EP3123227 und CN101334525 offenbaren jeweils Digitalmikroskope, wie sie im Stand der Technik bekannt sind.

Die Aufgabe der vorliegenden Erfindung ist es daher, eine Vorrichtung für die Digitalmikroskopie zu Verfügung zu stellen, die schnell und flexibel an die jeweilige Messaufgabe angepasst werden kann und die darüber hinaus transportabel ist. Vorteilhafterweise soll eine Fokussierung auf verschieden hohe Objekte (also auf verschiedene Arbeitsebenen im Arbeitsbereich) so erfolgen, dass der durch die Konfiguration bewusst gewählte Abbildungsmaßstab durch das "Scharfstellen" selbst nicht verändert wird. Auch sollen Vergrößerungen von über 100-fach mit Arbeitsabständen von mindestens 30 und vorzugsweise sogar > 50 mm ermöglicht werden, so dass die Vorrichtung nicht nur zur Inspektion, sondern wahlweise z.B. auch für Reinigungs- und Montageaktivitäten unter vergrößerter Betrachtung eingesetzt werden kann.

Diese Aufgabe wird durch die vorliegende Erfindung erfüllt. Die Erfindung wird in den unabhängigen Ansprüchen definiert. Weitere vorteilhafte Ausführungsformen werden in den abhängigen Ansprüchen definiert.

### Detaillierte Beschreibung der Erfindung

Die erfindungsgemäße Vorrichtung umfasste einen Gerätefuß, ein Stativ mit einem Kamerakopf und einer Objektiveinheit. Die erfindungsgemäße Vorrichtung ist modular aufgebaut, dies bedeutet im Rahmen der Erfindung, dass alle einzelnen Module miteinander verbunden werden. Einzelne Module sind erfindungsgemäß unter anderem der Gerätefuß, das Stativ mit Kamerakopf und die Objektiveinheit, sowie alle weiteren Teile, die lösbar an diesen Modulen angebracht werden und im Folgenden beschrieben werden.

Erfindungsgemäß ist der Kamerakopf fest mit dem Stativ verbunden, so dass Kamerakopf und Stativ zusammen ein Modul bilden. Der Kamerakopf ist dabei mit dem Stativ derart verbunden, dass der Abstand des Kamerakopfes zu einer Arbeitsfläche auf der die Vorrichtung steht verändert werden kann. Das Stativ weist damit ein Mittel zur Höhenverstellung des Kamerakopfes auf. In einer Ausführungsform der Vorrichtung wird dies über eine Schwalbenschwanzführung mit Zahnstangentrieb, andersartige Linearversteller oder weitere geeignete Arten von Gewindetrieben und Führungen realisiert, die den Kamerakopf in der Position zur Arbeitsebene verändern. Die Position des Kamerakopfes kann dann beispielsweise mithilfe einer Handschraube arretiert werden. Die Höhe des Kamerakopfes kann damit abhängig von der Art der verwendeten Vorrichtung zur Höhenverstellung verstellt werden. In einer Ausführungsform der Erfindung ist die Höhe des Kamerakopfes zwischen 0 und 100 mm verstellbar. In anderen Ausführungsformen kann die Höhe des Kamerakopfes aber auch darüber hinaus verstellt werden, um die Untersuchung von besonders großen Objekten zu ermöglichen. Durch diese Ausgestaltung kann der Arbeitsbereich unterhalb des Kamerakopfes vergrößert werden. Die Größe des Arbeitsbereiches unterhalb des Kamerakopfes ist darüber hinaus prinzipiell abhängig von der Größe der gewählten Module. Die Wahl der Größe des Stativs beeinflusst unmittelbar die Größe des Arbeitsbereichs unterhalb der Kamera. In einer Ausführungsform der Erfindung beträgt der Arbeitsbereich unterhalb des Kamerakopfes bis zu 200 mm. Durch den erfinderischen modularen Aufbau der Erfindung ist es möglich die Größe des Arbeitsbereichs unterhalb des Kamerakopfes an die Arbeitsaufgabe anzupassen.

Die erfindungsgemäße Vorrichtung stellt in einer bevorzugten Variante einen Arbeitsbereich unterhalb des Kamerakopfes mit einer Arbeitshöhe bis zu 100 mm zur Verfügung. Hierdurch können wie bereits beschrieben auch größere Objekte mit der Vorrichtung untersucht oder montiert werden. Darüber hinaus wird durch einen Arbeitsabstand von ca. 30 bis 100 mm (abhängig vom gewählten Objektiv und optional einsetzbaren Tubusverlängerungen) ein komfortables Handling gewährleistet, wodurch sich die Vorrichtung auch sehr gut zum Montieren, Reinigen oder für andere Prozesse unter vergrößerter Betrachtung eignet.

Das Stativ ist erfindungsgemäß mit dem Gerätefuß lösbar verbunden. Der Gerätefuß ist erfindungsgemäß so geformt, dass das Stativ mit dem Kamerakopf und der Gerätefuß im verbundenen Zustand eine stabile Einheit darstellen. Stabile Einheit bedeutet in diesem Fall, dass Stabilität gegen umfallen und kippeln der Vorrichtung gewährleistet ist. Darüber hinaus ist die Kamera am Stativ so angebracht, dass sich der Gerätefuß nicht im Bildbereich der Kamera befindet.

Der Gerätefuß und das Stativ sind bevorzugt aus Aluminium, steifen oder versteiften Kunststoffen oder anderen formstabilen Materialien. In einer weiteren Ausführungsform können Teile der vorliegenden Erfindung aus Stahl, Eisen oder nicht-eisen Metallen gefertigt sein.

Im Kamerakopf befindet sich erfindungsgemäß eine Kamera. Als Kamera kann prinzipiell jede aus dem Stand der Technik bekannte Kamera genutzt werden, die für die Digitalmikroskopie geeignet ist. Bevorzugt wird eine USB UVC Kamera, eine HDMI oder CVBS Kamera eingesetzt, besonders bevorzugt eine 2.0 USB UVC Kamera, die einfach an eine datenverarbeitende Einrichtung angeschlossen werden kann.

Gemäß der Erfindung umfasst die Vorrichtung als weiteres Modul eine Objektiveinheit. Prinzipiell sind alle für das Mikroskopieren geeigneten Objektiveinheiten geeignet, die mit dem Kamerakopf am Stativ verbunden werden können. Beispielsweise können Multilinsenobjektiveinheiten verwendet werden. Die Objektiveinheit wird jeweils passend zur Arbeitsaufgabe gewählt. Das heißt, je nach gewünschtem Arbeitsabstand, Vergrößerung und Abbildungsgüte. Es können sowohl Objektiveinheiten ohne Beleuchtung als auch Objektiveinheiten mit Beleuchtung genutzt werden. Die Objektiveinheit kann über Steckverbindungen oder über Schraubverbindungen befestigt werden.

In der erfindungsgemäßen Vorrichtung sind der Kamerakopf und die Objektiveinheit lösbar miteinander verbunden. Dies hat den Vorteil, dass die Objektiveinheit je nach Anwendungsfall ausgetauscht werden kann. Dies erhöht die Einsatzmöglichkeiten der erfindungsgemäßen Vorrichtung enorm, da immer ein für die Betrachtungsaufgabe optimales Objektiv verwendet werden kann.

Lösbare Verbindungen im Sinne der Erfindung sind in der erfindungsgemäßen Vorrichtung steckbare, formschlüssige Verbindungen und/oder magnetische Verbindungen. Das heißt, die lösbaren Verbindungen im Rahmen der Erfindung werden durch steckbare, formschlüssige Verbindungen oder durch magnetische Verbindungen oder durch steckbare, formschlüssige und magnetische Verbindungen geschaffen. Die lösbaren Verbindungen im Sinne der Erfindung zeichnen sich dadurch aus, dass sie schnell hergestellt und auch wieder gelöst werden können und dennoch stabil sind. Das Lösen und Schließen der Verbindungen ist daher erfindungsgemäß ohne den Einsatz eines zusätzlichen Werkzeugs möglich.

Überraschenderweise hat sich gezeigt, dass es möglich ist, die einzelnen Module mit lösbaren Verbindungen im Sinne der Erfindung zu verbinden und damit ein flexibel zusammensetzbare modulare Vorrichtung zu schaffen, die genügend Stabilität für eine qualitativ hochwertige Digitalmikroskopie bietet.

In einer Ausführungsform umfasst die Vorrichtung als weiteres Modul mindestens eine Tubusverlängerung, die lösbar zwischen Kamerakopf und Objektiveinheit anbringbar ist. Durch die mindestens eine Tubusverlängerung kann die Vergrößerung weiterhin den Wünschen des Anwenders angepasst werden. Weiterhin können mit dieser einfachen Variation der Tubuslänge auch andere Objektive mit alternativen Brennweiten eingesetzt werden, um die Vorrichtung für spezielle Anwendungsfälle zu optimieren. Erfindungsgemäß können eine aber auch zwei oder mehrere Tubusverlängerungen eingesetzt werden. Das Einsetzten der mindestens einen Tubusverlängerung führt beim Einsatz desselben Objektivs zu einer Verkleinerung des Bildfeldes (Erhöhung der Vergrößerung). Erfindungsgemäß ist das Einsetzten einer oder mehrerer Tubusverlängerungen bis zur Verkleinerung des Bildfelds auf kleiner als 1mm möglich. Die mindestens eine Tubusverlängerung kann erfindungsgemäß durch eine Steckverbindung angebracht werden. Darüber hinaus kann die mindestens eine Tubusverlängerung als Träger für weitere optische Elemente dienen. Weiter optische Elemente können beispielsweise Filter, Polarisatoren, Strahlteiler zur Ein- oder Auskopplung von Licht sein.

In einer Ausführungsform der Erfindung weist die Vorrichtung eine Auflichtbeleuchtung am Kamerakopf oder an der Objektiveinheit auf.

Wenn sich die Auflichtbeleuchtung am Kamerakopf befindet, weist die Objektiveinheit zusätzlich einen Lichtleiter auf. Der Lichtleiter kann erfindungsgemäß als Rohr, als Faserbündel oder als Lichtleitstränge ausgeführt sein. Das Rohr besteht beispielsweise aus PMMA oder Glas.

In einer besonders bevorzugten Ausführungsform der erfindungsgemäßen Vorrichtung befindet sich die Auflichtbeleuchtung am Kamerakopf und an der Objektiveinheit befindet sich ein Rohr aus Glas oder Kunststoff (PMMA), welches als Lichtleiter fungiert.

Besonders vorteilhaft an dieser Ausführungsform ist, dass das die Justage des Lichts unabhängig von der Objektiveinheit vorgenommen wird und beim Wechseln der Objektiveinheit daher keine erneute Justage nötig ist.

In einer bevorzugten Ausführungsform der Erfindung weist die Objektiveinheit daher einen Lichtleiter auf, wenn der Kamerakopf eine Auflichtbeleuchtung umfasst.

Alternativ dazu kann die Auflichteinheit auch direkt an der Objektiveinheit verbaut sein. Bei dieser Ausführungsform ist ein zusätzlicher Lichtleiter nicht notwendig.

Das Stativ der erfindungsgemäßen Vorrichtung wird lösbar mit dem Gerätefuß verbunden. In einer Ausführungsform weist das Stativ im Boden mindestens eine Aussparung auf, die formschlüssig ein entsprechendes Gegenstück am Gerätefuß aufnehmen kann. In einer besonders bevorzugten Ausführungsform der Erfindung weist das Stativ am Boden zwei Aussparungen auf, die formschlüssig zwei entsprechend geformte Gegenstücke am Gerätefuß aufnehmen. Durch diese Steckverbindung wird eine formschlüssige Verbindung zwischen Gerätefuß und Stativ geschaffen und eine Verdrehung vermieden.

In einer weiteren Ausführungsform der Erfindung weisen das Stativ und der Gerätefuß zusätzlich jeweils mindestens einen Magneten auf, diese sind so angebracht und gepolt, dass eine zusätzliche Haltekraft zwischen Stativ und Gerätefuß entsteht. In einer bevorzugten Ausführungsform ist mindestens ein Magnet am Stativ oder am Gerätefuß angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht. In einer besonders bevorzugten Ausführungsform weißt der Gerätefuß zwei Stahlzapfen auf, die in dazu passende Löcher am Stativ eingeführt werden, wobei auf dem Grund der Löcher im Stativ jeweils Magneten angebracht sind.

In einer Ausführungsform umfasst die erfindungsgemäße Vorrichtung als weiteres Modul mindesten eine Halterung, wobei in einer Ausführungsform das Stativ mindestens eine Aussparung aufweist, in die die mindestens eine Halterung eingesteckt werden kann. In einer weiteren Ausführungsform kann die mindestens eine Halterung auch formschlüssig auf das Stativ ohne Aussparung oder auf den Gerätefuß aufgesteckt werden. In einer weiteren Ausführungsform der Erfindung weisen die mindestens eine Halterung und das Stativ zusätzlich jeweils mindestens einen Magneten auf, diese sind so angebracht und gepolt, dass eine zusätzliche Haltekraft zwischen Stativ und der mindestens einen Halterung entsteht.

In einer weiteren Ausführungsform ist mindestens ein Magnet am Stativ oder an der mindestens einen Halterung angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht.

In einer bevorzugten Ausführungsform umfasst die Vorrichtung als weitere Module zwei Halterungen, die in das Stativ eingesteckt werden können. In einer weiteren bevorzugten Ausführungsform weisen die beiden Halterungen und das Stativ zusätzlich jeweils mindestens einen Magneten auf, diese sind so angebracht und gepolt, dass eine zusätzliche Haltekraft zwischen dem Stativ und den Halterungen entsteht. In einer weiteren Ausführungsform ist mindestens ein Magnet am Stativ oder an den zwei Halterungen angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht.

In einer bevorzugten Ausführungsform weisen die beiden Halterungen zusätzlich Magneten auf, die so angebracht und gepolt sind, dass eine zusätzliche Haltekraft zwischen ihnen im Standfuß entsteht. In dieser Ausführungsform sind je zwei Zylinderstifte an den Halterungen angebracht, die am Ende jeweils einen Magneten haben. Diese werden in Durchgangslöcher im Standfuß eingesteckt, so dass sie sich darin treffen und gegenseitig anziehen und den Standfuß zwischen sich halten.

Die mindestens eine Halterung ist erfindungsgemäß so geformt, dass sie geeignet ist einen Bildschirm oder ein datenverarbeitendes Gerät mit einem Bildschirm aufzunehmen.

In einer Ausführungsform der Erfindung wird durch die mindestens eine Halterung ein Bildschirm gehalten, dieser wird vorteilhafterweise für die Datendarstellung verwendet. Die Datenverarbeitung und Datenanalyse kann in diesem Fall über einen zusätzlichen Desktop-PC erfolgen.

In einer bevorzugten Ausführungsform der Erfindung wird durch die mindestens eine Halterung ein datenverarbeitendes Gerät gehalten. Bevorzugt wird durch die mindestens eine Halterung ein Smartphone oder ein Tablet als datenverarbeitendes Gerät gehalten. Besonders bevorzugt ist es, wenn das datenverarbeitende Gerät eine Software z.B. in Form einer App aufweist, die geeignet ist die Daten der Kamera zu erfassen, darzustellen, zu speichern und optional diese zu analysieren. Damit kann auf die Verwendung eines Desktop-PC bei der Datenerfassung, Darstellung und Analyse verzichtet werden. Vorteilhafterweise ermöglicht dies den transportablen Einsatz der erfindungsgemäßen Vorrichtung, da Tablets oder Smartphone im Gegensatz zum Desktop-PC ebenfalls mobile Geräte darstellen.

In einer Ausführungsform der Erfindung umfasst die Vorrichtung daher weiterhin eine datenverarbeitende Einrichtung mit einem Bildschirm.

In einer weiteren Ausführungsform der Erfindung umfasst die Vorrichtung als weiteres Modul zusätzlich eine Arbeitsplattform, die lösbar mit dem Gerätefuß verbunden ist.

In einer Ausführungsform der Vorrichtung wird der Gerätefuß auf die Arbeitsplattform aufgesteckt. In dieser Ausführungsform weist die Arbeitsplattform eine Ausformung z.B. die Gegenform zum Fuß der Vorrichtung zu dessen formschlüssigen Einsatz auf. Weiterhin kann die Arbeitsplattform auch Ausformungen in Form von Pins haben, die formschlüssig in entsprechende Gegenstücke am Gerätefuß eingeführt werden können. In einer weiteren Ausführungsform weisen der Gerätefuß und die Arbeitsplattform an den Flächen, an denen beide nach dem aufstecken aufeinanderliegen jeweils mindestens einen Magnet auf. Die Magnete sind so gepolt, dass sie eine zusätzliche Haltekraft zwischen Arbeitsplattform und Gerätefuß bewirken.

In einer weiteren Ausführungsform der Erfindung wird der Gerätefuß auf eine definierte Stelle der Arbeitsplattform gestellt. Der Gerätefuß und die Arbeitsplattform weisen diesem Fall an den entsprechenden Berührungsflächen jeweils mindestens einen Magneten auf. Durch das Aufstellen des Gerätefußes auf die Arbeitsplattform wird durch die Magneten dann eine Haltekraft hervorgerufen, die die Arbeitsplattform gegen verrutschen sichert.

In einer weiteren Ausführungsform der Erfindung wird die Arbeitsplattform in den Gerätefuß eingeschoben. In dieser Ausführungsform weist die Arbeitsplattform eine Formung auf, die zumindest teilweise formschlüssig zum Gerätefuß ist. Durch das Einschieben der Arbeitsplattform in den Gerätefuß wird eine formschlüssige Verbindung hergestellt und ein verrutschen der Arbeitsplattform wird verhindert. In einer weiteren Ausführungsform der Erfindung befindet sich an der Arbeitsplattform und am Gerätefuß jeweils mindestens ein Magnet, diese sind derart angebracht und gepolt, dass sie eine zusätzliche Haltekraft zwischen Arbeitsplattform und Gerätefuß bewirken.

In einer weiteren Ausführungsform ist mindestens ein Magnet am Gerätefuß oder an der Arbeitsplattform angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht.

Die erfindungsgemäße Ausgestaltung der Verbindung von Arbeitsplatte mit Gerätefuß ermöglicht einen schnellen Auf- und Abbau der Vorrichtung und darüber hinaus einen schnellen Wechsel der eingesetzten Arbeitsplattformen. Dies wiederum erweitert das Einsatzgebiet der Vorrichtung sowie deren Flexibilität.

Bevorzugt ist die Arbeitsplattform so gestaltet, dass sie mit dem Gerätefuß eine Ebene bildet und nicht über diesen hinausragt oder tiefer steht. Somit werden störende Kanten verhindert und das Handling eines Objektes unter dem Kamerakopf wird erleichtert.

In einer Ausführungsform der Erfindung weist die Arbeitsplattform der erfindungsgemäßen Vorrichtung ein Raster mit Gewindelöchern auf, um flexibel darauf Halterungen, Anschläge, Aktuatoren, einen x-y Tisch oder weitere Komponenten und Module zu befestigen. Mit Hilfe der Rasterplatte können anwenderspezifisch zusätzliche Elemente auf der Arbeitsplatte angebracht werden. Denkbar sind hier beispielsweise Elemente zum Fixieren eines zu untersuchenden Objektes. Ein x-y-Tisch ermöglicht die Verschiebung eines Objektes während der Untersuchung ohne dieses zu berühren. In einer Ausführungsform der Erfindung weist die Arbeitsplattform ein Durchlicht auf. Dieses dient der zusätzlichen Beleuchtung im Durchlichtverfahren von zu untersuchenden Objekten oder Probenträgern auf der Arbeitsplattform. Rasterplatte, x-y-Tisch, beliebig andere Komponenten und Durchlicht können einzeln oder in jeder möglichen Kombination miteinander auf einer Arbeitsplattform integriert sein. Weiterhin kann die Arbeitsplattform Halter zur Inspektion vom Mikrowerkzeug,

Positionierhilfen und/oder Halter für Objektträger und/oder eine Vorrichtung zur Inspektion und Bearbeitung von Mikropipettenspitzen und/oder eine Vorrichtung die Mikro- oder Kleinteilmontage mit individuellen Halterungen und/oder einen Rotationshalter für die Rotation von zylindrischen Werkstücken bei der Werkstückprüfung aufweisen.

Die Arbeitsplattform kann erfindungsgemäß damit unabhängig von den übrigen Modulen der Vorrichtung, also z.B. Gerätefuß, Stativ, Objektiveinheit oder Halterung getauscht werden. Darüber hinaus ist es für den Einbau oder Tausch der Arbeitsplattform nicht notwendig, den Aufbau der übrigen Module zu verändern. Durch den erfindungsgemäßen Aufbau der Vorrichtung ist es daher möglich, eine Arbeitsplattform schnell einzubauen oder auszutauschen und die Vorrichtung damit an wechselnde Arbeitsaufgaben und Objekte anzupassen.

In einer weiteren Ausführungsform der Erfindung umfasst die Vorrichtung weiterhin Keile, die lösbar zwischen dem Gerätefuß und dem Stativ oder zwischen Gerätefuß und Standfläche (z.B. Tisch) angebracht werden können. Bevorzugt werden die Keile zwischen Gerätefuß und Stativ eingesteckt. Dadurch verändert sich der Winkel des Stativs zum Gerätefuß und damit auch der Betrachtungswinkel des Kamerakopfes. Die Verwendung der Keile wird durch den modularen Aufbau ermöglicht und stellt eine einfache Möglichkeit dar, den Betrachtungswinkel der Kamera zum Objekt zu verändern. So können zum Beispiel Stellen und Eigenschaften beobachtet werden, die bei lotrechter Draufsicht verdeckt oder schwierig zu bewerten sind. Auch störende Reflexe oder Spiegelungen an reflektierenden Objektoberflächen können so vermieden bzw. verringert werden.

In einer Ausführungsform der Erfindung umfasst die Vorrichtung weiterhin einen separaten Standfuß, der mindestens eine lösbare Halterung aufweist. Der Standfuß ist nicht mit den übrigen Modulen der Vorrichtung verbunden. Am Standfuß ist mindestens eine Halterung lösbar angebracht. Die lösbare Verbindung wird auch hier durch steckbare, formschlüssige Verbindungen und/oder magnetische Verbindungen hergestellt.

Der Standfuß weist erfindungsgemäß mindestens eine Aussparung auf, in die die mindestens eine Halterung eingesteckt werden kann. In einer weiteren Ausführungsform der Erfindung weisen die mindestens eine Halterung und/oder der Standfuß zusätzlich Magneten auf, die so angebracht und gepolt sind, dass eine zusätzliche Haltekraft zwischen dem Standfuß und der mindestens einen Halterung entsteht. In einer weiteren Ausführungsform ist mindestens ein Magnet am Standfuß oder an der mindestens einen Halterungen angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht.

In einer bevorzugten Ausführungsform sind an dem Standfuß zwei Halterungen lösbar angebracht. In einer Ausführungsform werden die zwei Halterungen in den Standfuß eingesteckt. In einer weiteren Ausführungsform weisen die beiden Halterungen und der Standfuß zusätzlich Magneten auf, die so angebracht und gepolt sind, dass eine zusätzliche Haltekraft zwischen dem Standfuß und den Halterungen entsteht.

In einer bevorzugten Ausführungsform weisen die beiden Halterungen zusätzlich Magneten auf, die so angebracht und gepolt sind, dass eine zusätzliche Haltekraft zwischen ihnen im Standfuß entsteht. In dieser Ausführungsform sind je zwei Zylinderstifte an den Halterungen angebracht, die am Ende jeweils einen Magneten haben. Diese werden in Durchgangslöcher im Standfuß eingesteckt, so dass sie sich darin treffen und anziehen und den Standfuß zwischen sich halten.

Die mindestens eine Halterung ist erfindungsgemäß so geformt, dass sie geeignet ist einen Bildschirm oder ein datenverarbeitendes Gerät mit einem Bildschirm aufzunehmen. In einer Ausführungsform der Vorrichtung wird durch die mindestens eine Halterung ein Smartphone oder ein Tablet gehalten. Besonders bevorzugt ist es, wenn das datenverarbeitende Gerät eine Software z.B. in Form einer App aufweist, die geeignet ist die Daten der Kamera zu erfassen, darzustellen und optional diese zu analysieren.

In einer Ausführungsform ist die mindestens eine Halterung der Vorrichtung dazu geeignet, einen Bildschirm oder eine datenverarbeitende Vorrichtung die einen Bildschirm aufweist, aufzunehmen.

In einer bevorzugten Ausführungsform der Erfindung ist die mindestens eine Halterung sowohl dafür geeignet am Stativ angebracht zu werden als auch separaten Standfuß. So kann der Benutzer passend zu den Bedürfnissen entscheiden, ob er das Anzeige- bzw. Datenverarbeitungsgerät direkt am Stativ über der Arbeitsfläche oder separat davon am Standfuß anbringen möchte. Dadurch kann man nicht nur optimal den Anforderungen der jeweiligen Arbeitsaufgabe entsprechen, sondern zusätzlich auch die Ergonomie je nach Anwendung steigern. Zwischen beiden Varianten kann durch einfaches Umstecken der Halterung schnell und flexibel gewechselt werden.

In einer weiteren Ausführungsform können zwei Halterungen zur Aufnahme von zwei Geräten realisiert werden, indem eine Halterung ein Gerät am Stativ und die andere Halterung ein weiteres Gerät am separaten Standfuß halten. Eine der Halterungen kann ein datenverarbeitendes Gerät und die andere Halterung einen Bildschirm aufnehmen. In diesem Fall kann die Datenverarbeitung, Darstellung und Analyse an dem datenverarbeitenden Gerät erfolgen und zusätzlich können die Daten auf dem Bildschirm dargestellt werden. Damit ist es möglich die Mikroskopierbilder gleichzeitig einer größeren Anzahl an Anwendern zugänglich zu machen und damit die Weiterverarbeitung und Datenanalyse zu beschleunigen. Dies ist vor allem für Anwendungen im Bereich der Qualitätssicherung in wirtschaftlich geführten Prozessen von Interesse.

In einer weiteren Ausführungsform wird in beiden Halterungen (eine am Stativ und eine am Standfuß) ein datenverarbeitendes Gerät mit einem Bildschirm angebracht. Damit ist auf beiden Geräten mit einer geeigneten Software die Datendarstellung und Datenanalyse möglich. Damit können gleichzeitig unabhängig voneinander Analyseschritte durchgeführt werden, was wiederum zu einer Zeitersparnis führt und damit die Wirtschaftlichkeit der Vorrichtung steigert. In diesem Fall kann zum Beispiel auch die Datenverarbeitung, Darstellung und Analyse an getrennten Geräten erfolgen. Damit ist es auch möglich, mit unterschiedlichen Softwareanwendungen gleichzeitig auf zwei Geräten zu arbeiten. Dies ist vor allem für Anwendungen im Bereich der Qualitätssicherung in wirtschaftlich geführten Prozessen von Interesse. Diese Konfiguration ermöglicht es weiterführend auch, eine weitere Zubehörkamera in die Vorrichtung zu integrieren. So kann zum Beispiel eine Betrachtung von oben und gleichzeitig eine Seitenansicht jeweils auf zwei getrennten Bildschirmen oder Geräten ermöglicht werden.

Die erfindungsgemäße Vorrichtung kann beispielsweise in der Qualitätssicherung, Prozessüberwachung, Produktion, Montage, Teilereinigung, in der Bio-Analyse und/oder der Forschung und Entwicklung eingesetzt werden. In der Qualitätssicherung, Produktion und Analytik ist der Einsatz in der der Metall-, Optik-, Elektronik- und Halbleiterindustrie oder der Automotivindustrie denkbar.

Insbesondere bei diesen Anwendungen ist eine große Flexibilität der Vorrichtung für die Digitalmikroskopie notwendig. Durch den modularen Aufbau der erfindungsgemäßen Vorrichtung und die Ausgestaltung der lösbaren Verbindungen in Form von Steck- und Magnetverbindungen ist es möglich die erfindungsgemäße Vorrichtung schnell auf- und abzubauen und damit unkompliziert zu transportieren. So können zum Beispiel mit der Erfindung auch Teile und Prozesse außerhalb einer typischen Laborumgebung direkt an Maschinen, in der Produktionsumgebung, beim Kunden, in der Natur oder anderweitig abseits von Laboren vor Ort inspiziert, analysiert und unter Vergrößerung bearbeitet werden.

Darüber hinaus bietet der modulare Aufbau den großen Vorteil, dass einzelne Module wie beispielsweise die Arbeitsplattform,die Objektiveinheit und die Halter je nach Anwendungsfall schnell ausgetauscht werden können. Auch Zubehör wie Keile zur Änderung des Betrachtungswinkels und Tubusverlängerungen für das Objektiv können flexibel und unkompliziert je nach Erfordernis eingefügt werden. Vorteilhafterweise ist hierfür keinerlei zusätzliches Werkzeug notwendig.

Im Folgenden wird die Erfindung in 7 Figuren näher erläutert.
- Figur 1: zeigt den Gerätefuß, das Stativ mit Kamerakopf an Verstelleinheit (Höhentrieb) und die Objektiveinheit mit Beleuchtung in zusammengebautem Zustand;
- Figur 2: zeigt eine Ausführungsform der Vorrichtung als Explosionszeichnung;
- Figur 3: zeigt eine Ausführungsform der Vorrichtung mit einem datenverarbeitenden Gerät;
- Figur 4: zeigt eine Ausführungsform der Vorrichtung mit einer Arbeitsplattform und einem separaten Standfuß;
- Figur 5: zeigt den separaten Standfuß als Explosionszeichnung;
- Figur 6: zeigt eine Ausführungsform der Vorrichtung als Explosionszeichnung mit zwei verschiedenen Arbeitsplattformen;
- Figur 7: zeigte eine Ausführungsform der Vorrichtung und eine zusätzliche Arbeitsplattform.

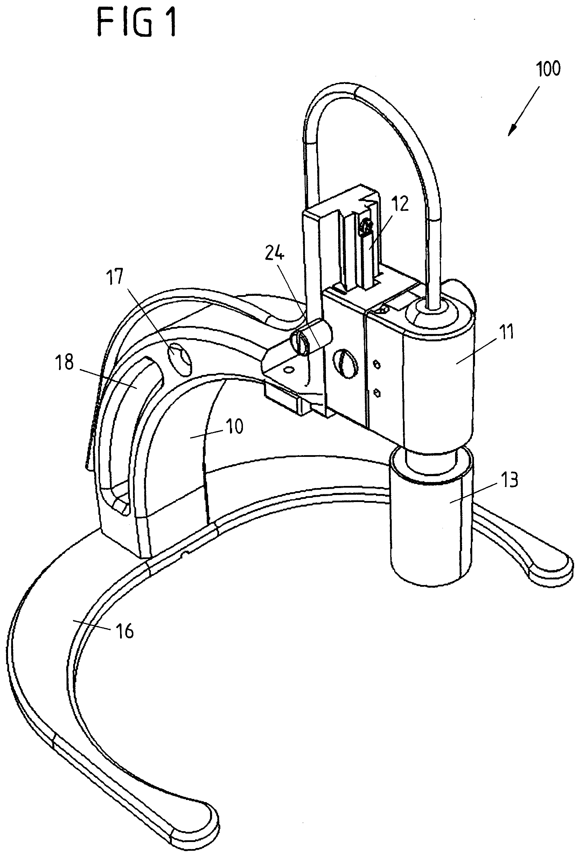

**Figur 1** zeigt einen Teil der Vorrichtung, in der der Gerätefuß 16 mit dem Stativ 10 verbunden ist. Am Stativ 10 befindet sich der Kamerakopf 11, dessen Höhe über eine Vorrichtung 12 veränderbar ist. Die Vorrichtung 12 ist ein Linearversteller (hier beispielhaft Zahnstangentrieb) auf der der Kamerakopf 11 nach oben und unten bewegt werden kann. Die Position des Kamerakopfes 11 wird mithilfe eines Drehknopfes, der der Schraube 24 gegenüberliegt arretiert. An dem Kamerakopf 11 befindet sich die Objektiveinheit 13, in der sich auch die Beleuchtungseinheit 14 befindet. Kamerakopf 11 und Objektiveinheit 13 sind nach unten gerichtet, wobei der Gerätefuß 16 so geformt ist, dass er von der Kamera im Kamerakopf 11 nicht erfasst wird.

Das Stativ 10 weist eine erste Öffnung17 und eine zweite Öffnung 18 auf. Beide Öffnungen dienen der Aufnahme der mindestens einen Halterung, die in der Figur nicht gezeigt ist. Die zweite Öffnung 18 ist dabei durchgängig durch das Stativ 10 ausgebildet und kann daher beispielsweise dazu verwendet werden, Kabel hindurch zuführen und damit einen aufgeräumten Arbeitsplatz zu schaffen.

Die erste Öffnung 17 kann entweder durchgängig durch das Stativ 10 ausgebildet sein oder nicht durchgängig. Ist die erste Öffnung 17 nicht durchgängig ausgebildet, so befindet sich an der der ersten Öffnung 17 gegenüberliegenden Seite des Stativs 10 eine analoge Aussparung, die der Aufnahme einer Halterung dienen kann. Diese ist in der Figur 1 jedoch nicht zu sehen.

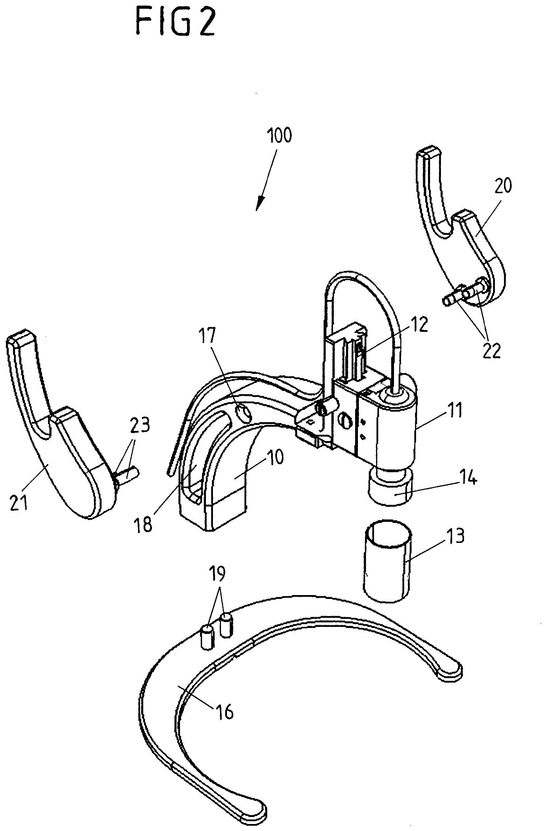

Eine Explosionszeichnung der Vorrichtung 100 ist in der **Figur 2** dargestellt. Deutlich zu erkennen sind die zwei Ausformungen 19 am Gerätefuß 16. Die Ausformungen 19 passen formschlüssig in entsprechende Gegenstücke am Stativ 10 welches so auf den Gerätefuß 16 aufgesteckt wird. Zusätzlich kann im Bereich der Ausformungen 19 des Gerätefußes 16 und an den Gegenstücken am Stativ 10 jeweils ein Magnet verbaut sein. Diese Magneten sorgen für eine zusätzliche Haltekraft zwischen Gerätefuß 16 und Stativ 10. In einer weiteren Ausführungsform ist mindestens ein Magnet am Stativ 10 oder an dem Gerätefuß 16 angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht.

Die zwei Halterungen 20, 21 weisen jeweils zwei Ausformungen in Form von Pins 22, 23 auf. Diese können in die Aussparungen 17 und 18 des Stativs 10 eingesteckt werden. Zusätzlich kann im Bereich der Ausformungen 22, 23 der Halterungen 20, 21 oder an den Gegenstücken 17 und 18 am Stativ 10 mindestens ein Magnet verbaut sein. Diese Magneten sorgen für eine zusätzliche Haltekraft zwischen den Halterungen 20, 21 und dem Stativ 10. In einer weiteren Ausführungsform ist mindestens ein Magnet am Stativ 10 oder an den Halterungen 20, 21 angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht. Die Objektiveinheit 13 wird auf den Kamerakopf 11 bzw. auf die daran befindliche Beleuchtungseinheit 14 aufgesteckt. Alternativ befindet sich die Beleuchtungseinheit 14 mit in der Objektiveinheit 13 und wird zusammen mit der Objektiveinheit 13 als kompaktes Modul an den Kamerakopf 11 gesteckt.

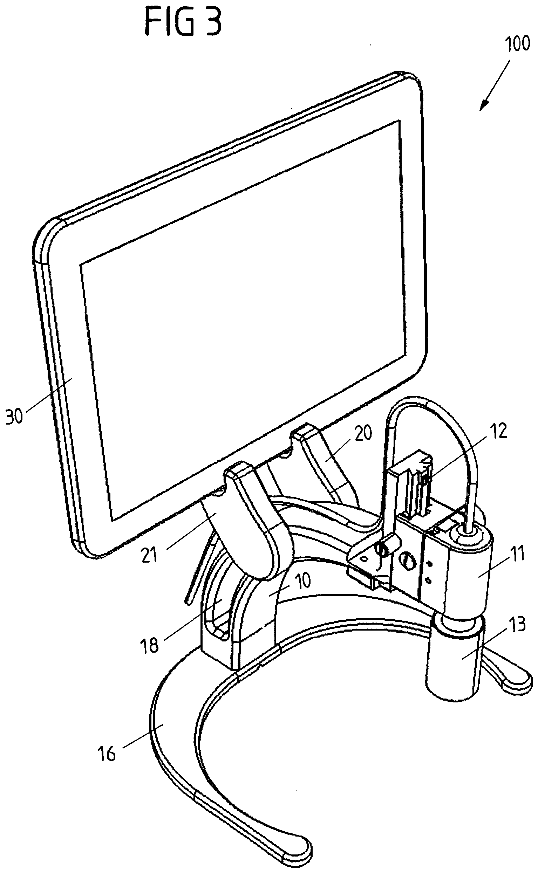

**Figur 3** zeigt eine Ausführungsform der erfindungsgemäßen Vorrichtung 100 im zusammengebauten Zustand. Die Vorrichtung 100 weist zwei Halterungen 20 und 21 auf, die ein Tablet 30 halten. Grundsätzlich können die Halterungen verschiedene Ausführungsformen von Bildschirmen oder datenverarbeitenden Geräten mit Bildschirmen aufnehmen. Neben einem Tablet kann dies beispielsweise auch ein Smartphone sein.

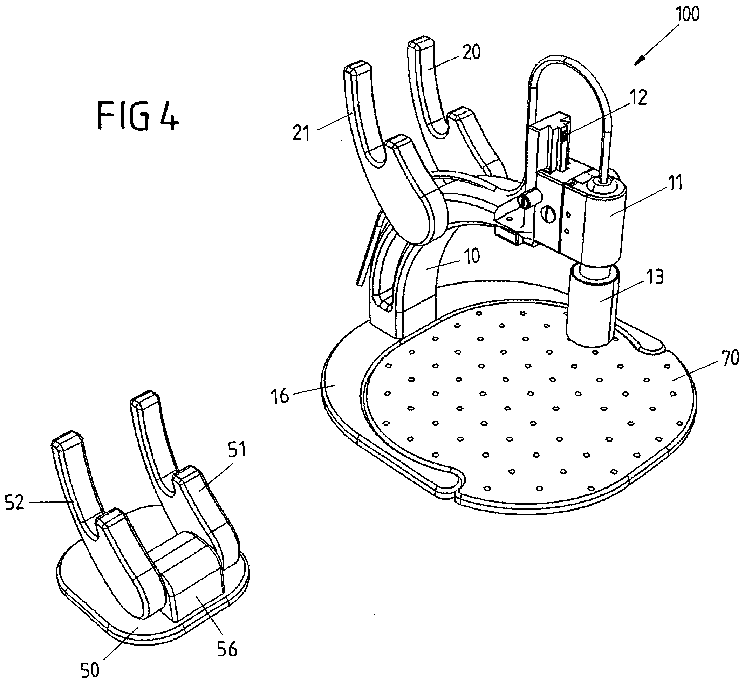

Die Vorrichtung 100 kann weiterhin eine Arbeitsplattform 70 aufweisen, wie in **Figur 4** dargestellt. Die Arbeitsplattform 70 weist eine solche Formgebung auf, dass die Arbeitsplattform 70 formschlüssig in den Gerätefuß 16 eingesteckt werden kann. Dadurch entsteht eine Verbindung zwischen Gerätefuß 16 und Arbeitsplattform 70 die verhindert, dass die Arbeitsplattform 70 sich verschieben kann. Gleichzeitig erhöht der Einsatz der Arbeitsplattform 70 die Stabilität der gesamten Vorrichtung 100. Die Arbeitsplattform 70 schließt dabei bündig mit der Oberfläche des Gerätefußes 16 ab. Die Arbeitsplattform 70 und der Gerätefuß 16 können darüber hinaus, an wenigstens einer Stelle wo sich die beiden Module berühren, jeweils einen Magneten aufweisen. Diese Magneten sind derart ausgeführt, dass eine zusätzliche Haltekraft zwischen Gerätefuß 16 und Arbeitsplattform 70 entsteht. In einer weiteren Ausführungsform ist mindestens ein Magnet am Gerätefuß 16 oder an der Arbeitsplattform 70 angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht.

Weiterhin zeigt Figur 4 einen separaten Standfuß 50 der zwei lösbare Halterungen 51, 52 aufweist. Die Halterungen sind an einem Aufbau 56 des Standfußes 50 angebracht. Die Halterungen 51, 52 sind so geformt, dass sie eine datenverarbeitendes Gerät oder einen Bildschirm aufnehmen können. In dieser Ausführung sind die Halterungen 51, 52 identisch der Halterungen 21, 22. Diese können somit wahlweise am Stativ oder am separaten Standfuß angebracht werden.

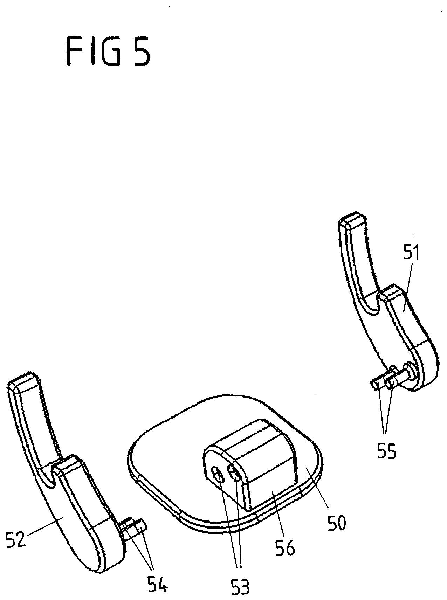

**Figur 5** zeigt den separaten Standfuß 50 mit zwei Halterungen 51, 52 als Explosionszeichnung. Der Standfuß 50 weist einen Aufbau 56 auf, der zwei Aussparungen 53 besitzt. Die Aussparungen 53 können entweder durchgängig durch den Aufbau 56 ausgebildet sein oder nicht durchgängig. Wenn die Aussparungen 53 nicht durchgängig ausgebildet sind befinden sich noch einmal zwei Aussparungen an der den Aussparungen 53 gegenüberliegenden Seite des Aufbaus 56. Diese können der Aufnahme einer Halterung dienen. Die Halterungen 51, 52 weisen jeweils zwei Ausformungen 54, 55 auf. Diese sind hier in Form von Pins ausgeführt. Die Ausformungen 54, 55 können formschlüssig in die Aussparungen 53 eingesteckt werden, um die Halterungen 51, 52 lösbar mit dem Standfuß 50 zu verbinden. In einer weiteren Ausführungsform weisen die Halterungen 51, 52 und der Aufbau 56 des Standfußes 50 jeweils Magneten auf. Diese sind so positioniert und gepolt, das beim Einstecken der Halterungen 51, 52 in den Aufbau 56 des Standfußes 50 eine zusätzliche Haltekraft zwischen den Halterungen 51, 52 und dem Aufbau 56 hervorgerufen wird.

In einer bevorzugten Ausführungsform weisen die beiden Halterungen 51, 52 zusätzlich Magneten auf, die so angebracht und gepolt sind, dass eine zusätzliche Haltekraft zwischen ihnen im Standfuß 50 entsteht. In dieser Ausführungsform sind an den zwei Ausformungen 54, 55 der Halterungen jeweils Magneten angebracht. Die Löcher 53 des Standfußes 50 sind als Durchgangslöcher ausgebildet, so dass sie sich darin treffen und anziehen und den Standfuß 50 zwischen sich halten.

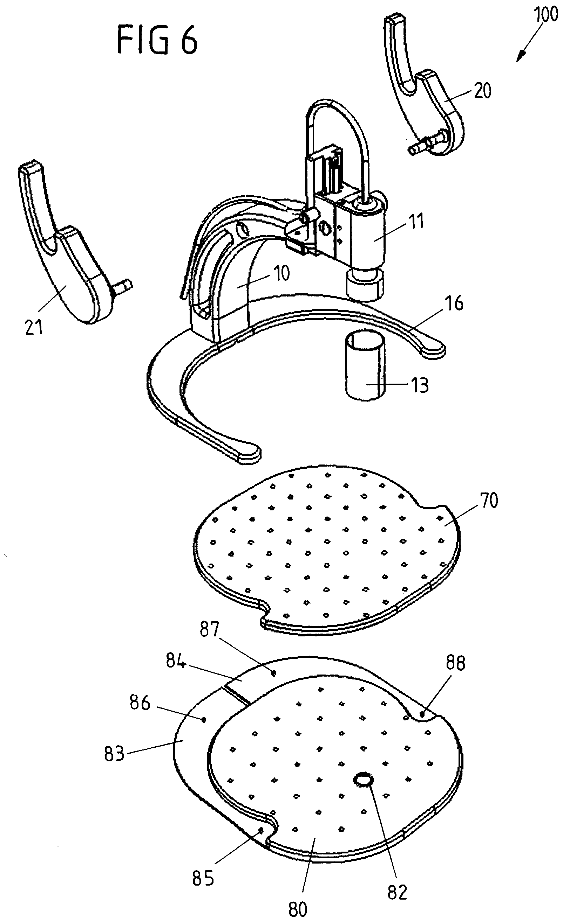

**Figur 6** zeigt eine Ausführungsform der erfindungsgemäßen Vorrichtung 100 in einer Explosionszeichnung mit zwei verschiedenen Arbeitsplattformen 70, 80. Der Gerätefuß 16 ist mit dem Stativ 10 verbunden. Das Objektiv 13 ist auf den Kamerakopf 11 aufsteckbar. Die Halterungen 20, 21 werden mit dem Stativ 10 verbunden. In den Gerätefuß 16 wird in einer Ausführungsform die Arbeitsplattform 70 formschlüssig eingesteckt. Die Arbeitsplattform 70 schließt bündig mit dem Gerätefuß 16 ab und weist eine Rasterplatte als Oberfläche auf.

In einer weiteren Ausführungsform wird nicht die Arbeitsplattform 70 verwendet, sondern die Arbeitsplattform 80. Der Gerätefuß 16 wird auf die Arbeitsplattform 80 aufgesteckt. Die Arbeitsplattform 80 weist dafür in den Bereichen 83, 84 Ausformungen 85, 86, 87, 88 auf, die beispielsweise in Form von Pins ausgeführt sein können. Entsprechende Gegenstücke befinden sich am Boden des Gerätefußes 16. Zusätzlich kann im Bereich 83 und/oder 84 der Arbeitsplattform 80 und im Bereich des Bodens des Gerätefußes 16 jeweils mindestens ein Magnet angebracht sein. Diese Magneten sind so positioniert und gepolt, dass beim Einstecken des Gerätefußes 16 in die Arbeitsplattform 80 eine zusätzliche Haltekraft entsteht. In einer weiteren Ausführungsform ist mindestens ein Magnet am Gerätefuß 16 oder an der Arbeitsplattform 80 angebracht und mindestens ein Gegenstück aus einem magnetisierbaren Material, beispielsweise aus Stahl, ist an dem Modul angebracht, welches keinen Magneten aufweist. Magnet und Gegenstück sind dabei jeweils so positioniert, dass eine zusätzliche Haltekraft entsteht.

Die dargestellte Arbeitsplattform 80 weist beispielhaft eine Rasterplatte auf ihrer Oberfläche auf und zusätzlich eine Durchlichteinheit 82.

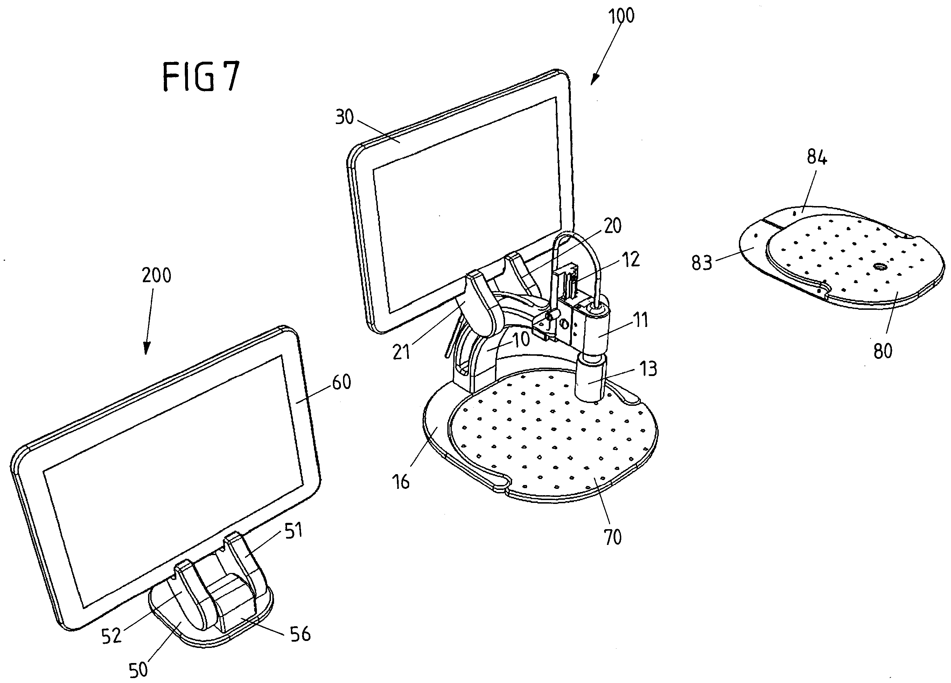

**Figur 7** zeigt eine Ausführungsform der erfindungsgemäßen Vorrichtung 100 mit einem separaten Standfuß 50 und einer zusätzlichen Arbeitsplattform 80. In den Gerätefuß16 ist die Arbeitsplattform 70 eingesteckt und auf den Halterungen 20, 21 ist ein datenverarbeitendes Gerät 30 angebracht. Am Kamerakopf 11 ist das Objektiv 13 aufgesteckt, indem sich auch die Beleuchtungseinheit befindet. Weiterhin sind am separaten Standfuß 50 zwei Halterungen 51, 52 angebracht, die einen weiteren Bildschirm 60 halten.

Die Arbeitsplattform 70 kann bei Bedarf einfach aufgrund der schnell lösbaren Verbindungen durch eine andere Arbeitsplattform 70 oder alternativ durch die Arbeitsplattform 80 ausgetauscht werden.

### Bezugszeichen

- 10: Stativ
- 11: Kamerakopf
- 12: Vorrichtung zur Änderung der Höhe des Kamerakopfes
- 13: Objektiveinheit
- 14: Beleuchtungseinheit
- 16: Gerätefuß
- 17: erste Öffnung
- 18: zweite Öffnung
- 19: Ausformungen
- 20, 21: Halterung
- 22, 23: Ausformungen
- 24: Schraube
- 30: datenverarbeitendes Gerät
- 50: Standfuß
- 56: Aufbau
- 51,52: Halterung
- 53: Aussparung
- 54, 55: Ausformungen
- 60: Bildschirm
- 70, 80: Arbeitsplattform
- 82: Durchlicht
- 83, 84: Bereiche der Arbeitsplattform
- 85, 86, 87, 88: Ausformungen
- 100: Vorrichtung

## Patentansprüche

1. Vorrichtung (100) für die Digitalmikroskopie umfassend einen Gerätefuß (16), ein Stativ (10) mit einem Kamerakopf (11) und eine Objektiveinheit (13) **dadurch gekennzeichnet, dass** die Vorrichtung (100) einen modularen Aufbau aufweist, wobei alle Module durch lösbare Verbindungen miteinander verbunden werden;
dass der Gerätefuß (16), das Stativ (10) mit einem Kamerakopf (11) und die Objektiveinheit (13) jeweils Module darstellen;
dass das Stativ (10) mit dem Kamerakopf (11) und der Gerätefuß (16) lösbar miteinander verbunden sind;
dass die Objektiveinheit (13) lösbar mit dem Kamerakopf (11) verbunden ist;
dass der Kamerakopf (11) am Stativ (10) derart angebracht ist, dass sich der Gerätefuß (16) nicht im Bildbereich des Kamerakopfes (11) befindet; und
dass die lösbaren Verbindungen steckbare, formschlüssige Verbindungen und/oder magnetische Verbindungen sind.

2. Vorrichtung (100) gemäß Anspruch 1, **dadurch gekennzeichnet, dass** die Vorrichtung als weiteres Modul mindestens eine Halterung (20, 21) umfasst, die lösbar mit dem Stativ (10) verbunden ist.

3. Vorrichtung (100) nach einem der vorangegangenen Ansprüche, **dadurch gekennzeichnet, dass** die Vorrichtung (100) weiterhin eine datenverarbeitende Einrichtung mit einem Bildschirm (30, 60) aufweist.

4. Vorrichtung (100) nach einem der vorangegangenen Ansprüche, **dadurch gekennzeichnet, dass** die Vorrichtung (100) als weiteres Modul eine Arbeitsplattform (70, 80) umfasst, die lösbar mit dem Gerätefuß (16) verbunden ist.

5. Vorrichtung (100) nach Anspruch 4, **dadurch gekennzeichnet, dass** die Arbeitsplattform (70, 80) eine Rasterplatte, Halterungen, Aktuatoren, Versteller, zusätzliche Kameras, weitere Komponenten und/oder einen x-y-Tisch und/oder ein Durchlicht (82) und/oder Halter zur Inspektion von Mikrowerkzeug und/oder Positionierhilfen und/oder Halter für Objektträger und/oder eine Vorrichtung zur Inspektion und Bearbeitung von Mikropipettenspitzen und/oder eine Vorrichtung für die Mikro- oder Kleinteilmontage mit individuellen Halterungen und/oder einen Rotationshalter für die Rotation von zylindrischen Werkstücken bei der Werkstückprüfung aufweist.

6. Vorrichtung (100) nach einem der vorangegangenen Ansprüche, **dadurch gekennzeichnet, dass** die Vorrichtung (100) weiterhin einen separaten Standfuß (50) umfasst, der mindestens eine lösbare Halterung (51, 52) aufweist.

7. Vorrichtung (100) nach einem der vorangegangenen Ansprüche, **dadurch gekennzeichnet, dass** die mindestens eine Halterung (20, 21, 51, 52) dazu geeignet ist, einen Bildschirm (60) oder eine datenverarbeitende Vorrichtung die einen Bildschirm aufweist (30), aufzunehmen.

8. Vorrichtung (100) nach einem der vorangegangenen Ansprüche, **dadurch gekennzeichnet, dass** die Vorrichtung (100) weiterhin eine Auflichtbeleuchtung am Kamerakopf (11) oder an der Objektiveinheit (13) aufweist.

9. Vorrichtung (100) nach Anspruch 8, **dadurch gekennzeichnet, dass** die Objektiveinheit (13) einen Lichtleiter aufweist, wenn der Kamerakopf (11) eine Auflichtbeleuchtung umfasst.

10. Vorrichtung (100) nach einem der vorangegangenen Ansprüche, **dadurch gekennzeichnet, dass** die Vorrichtung (100) weiterhin mindestens eine Tubusverlängerung umfasst, die lösbar zwischen Kamerakopf (11) und Objektiveinheit (13) anbringbar ist.

11. Vorrichtung (100) nach einem der vorangegangenen Ansprüche, **dadurch gekennzeichnet, dass** die Vorrichtung (100) weiterhin Keile umfasst, die lösbar zwischen Gerätefuß (16) und Stativ (10) oder Gerätefuß (16) und einer Standfläche angebracht werden können.

12. Verwendung der Vorrichtung (100) nach den Ansprüchen 1 bis 11 in der Qualitätssicherung, Prozessüberwachung, Produktion, Montage, Teilereinigung, in der Bio-Analyse und/oder der Forschung und Entwicklung.

## Claims

1. Apparatus (100) for digital microscopy comprising an equipment base (16), a stand (10) with a camera head (11), and an objective unit (13), **characterized**
**in that** the apparatus (100) has a modular construction, all the modules being connected to one another by releasable connections;
**in that** the equipment base (16), the stand (10) with a camera head (11), and the objective unit (13) each constitute modules;
**in that** the stand (10) with the camera head (11) and the equipment base (16) are releasably connected to one another;
**in that** the objective unit (13) is releasably connected to the camera head (11);
**in that** the camera head (11) is attached to the stand (10) in such a way that the equipment base (16) is not situated in the image region of the camera head (11); and
**in that** the releasable connections are pluggable, positively locking connections and/or magnetic connections.

2. Apparatus (100) according to Claim 1, **characterized in that** the apparatus comprises as a further module at least one mount (20, 21) which is releasably connected to the stand (10) .

3. Apparatus (100) according to either of the preceding claims, **characterized in that** the apparatus (100) furthermore has a data processing device with a screen (30, 60) .

4. Apparatus (100) according to any of the preceding claims, **characterized in that** the apparatus (100) comprises as a further module a work platform (70, 80) which is releasably connected to the equipment base (16).

5. Apparatus (100) according to Claim 4, **characterized in that** the work platform (70, 80) has a grid plate, mounts, actuators, adjusters, additional cameras, further components and/or an x-y table and/or a transmitted light facility (82) and/or holders for the inspection of a microtool and/or positioning aids and/or holders for specimen slides and/or an apparatus for the inspection and processing of micropipette tips and/or an apparatus for micro- or small-component assembly with individual mounts, and/or a rotary holder for the rotation of cylindrical workpieces during workpiece testing.

6. Apparatus (100) according to any of the preceding claims, **characterized in that** the apparatus (100) furthermore comprises a separate standing base (50) having at least one releasable mount (51, 52).

7. Apparatus (100) according to any of the preceding claims, **characterized in that** the at least one mount (20, 21, 51, 52) is suitable for receiving a screen (60) or a data processing apparatus having a screen (30).

8. Apparatus (100) according to any of the preceding claims, **characterized in that** the apparatus (100) furthermore has a reflected light illumination facility on the camera head (11) or on the objective unit (13).

9. Apparatus (100) according to Claim 8, **characterized in that** the objective unit (13) has a light guide if the camera head (11) comprises a reflected light illumination facility.

10. Apparatus (100) according to any of the preceding claims, **characterized in that** the apparatus (100) furthermore comprises at least one tube extension which is releasably attachable between camera head (11) and objective unit (13) .

11. Apparatus (100) according to any of the preceding claims, **characterized in that** the apparatus (100) furthermore comprises wedges which can be releasably attached between equipment base (16) and stand (10) or equipment base (16) and a standing surface.

12. Use of the apparatus (100) according to Claims 1 to 11 in quality assurance, process monitoring, production, assembly, parts cleaning, in bioanalysis and/or research and development.

## Revendications

1. Dispositif (100) pour la microscopie numérique comprenant un pied d'appareil (16), un statif (10) avec une tête de caméra (11) et une unité d'objectif (13), **caractérisé en ce que** le dispositif (100) présente une structure modulaire, tous les modules étant reliés entre eux par des liaisons détachables ;
**en ce que** le pied d'appareil (16), le statif (10) avec une tête de caméra (11) et l'unité d'objectif (13) constituent respectivement des modules ;
**en ce que** le statif (10) avec la tête de caméra (11) et le pied d'appareil (16) sont reliés entre eux de manière détachable ; **en ce que** l'unité d'objectif (13) est reliée de manière détachable à la tête de caméra (11) ;
**en ce que** la tête de caméra (11) est montée sur le statif (10) de telle sorte que le pied d'appareil (16) ne se trouve pas dans la zone d'image de la tête de caméra (11) ; et
**en ce que** les liaisons détachables sont des liaisons enfichables, par complémentarité de forme et/ou des liaisons magnétiques.

2. Dispositif (100) selon la revendication 1, **caractérisé en ce que** le dispositif comprend en tant que module supplémentaire au moins un support (20, 21) qui est relié de manière détachable au statif (10).

3. Dispositif (100) selon l'une quelconque des revendications précédentes, **caractérisé en ce que** le dispositif (100) présente en outre un appareil de traitement de données avec un écran (30, 60) .

4. Dispositif (100) selon l'une quelconque des revendications précédentes, **caractérisé en ce que** le dispositif (100) comprend en tant que module supplémentaire une plate-forme de travail (70, 80) qui est reliée de manière détachable au pied d'appareil (16) .

5. Dispositif (100) selon la revendication 4, **caractérisé en ce que** la plate-forme de travail (70, 80) présente une plaque à grille, des supports, des actionneurs, des régulateurs, des caméras supplémentaires, d'autres composants et/ou une table x-y et/ou une lumière transmise (82) et/ou des supports pour l'inspection d'un micro-outil et/ou des auxiliaires de positionnement et/ou des supports pour porte-objets et/ou un dispositif pour l'inspection et le traitement de pointes de micropipettes et/ou un dispositif pour le montage de micro-pièces ou de petites pièces avec des supports individuels et/ou un support rotatif pour la rotation de pièces cylindriques lors du contrôle des pièces.

6. Dispositif (100) selon l'une quelconque des revendications précédentes, **caractérisé en ce que** le dispositif (100) comprend en outre un pied d'appui (50) qui présente au moins un support détachable (51, 52).

7. Dispositif (100) selon l'une quelconque des revendications précédentes, **caractérisé en ce que** l'au moins un support (20, 21, 51, 52) est approprié pour recevoir un écran (60) ou un dispositif de traitement de données qui présente un écran (30).

8. Dispositif (100) selon l'une quelconque des revendications précédentes, **caractérisé en ce que** le dispositif (100) présente en outre un éclairage incident sur la tête de caméra (11) ou sur l'unité d'objectif (13).

9. Dispositif (100) selon la revendication 8, **caractérisé en ce que** l'unité d'objectif (13) présente un guide de lumière lorsque la tête de caméra (11) comprend un éclairage incident.

10. Dispositif (100) selon l'une quelconque des revendications précédentes, **caractérisé en ce que** le dispositif (100) comprend en outre au moins un prolongement de tube qui peut être monté de manière détachable entre la tête de caméra (11) et l'unité d'objectif (13).

11. Dispositif (100) selon l'une quelconque des revendications précédentes, **caractérisé en ce que** le dispositif (100) comprend en outre des cales qui peuvent être montées de manière détachable entre le pied d'appareil (16) et le statif (10) ou entre le pied d'appareil (16) et une surface d'appui.

12. Utilisation du dispositif (100) selon les revendications 1 à 11 dans l'assurance qualité, la surveillance des processus, la production, le montage, le nettoyage des pièces, dans la bio-analyse et/ou la recherche et le développement.
